(19) **Europäisches Patentamt**

**European Patent Office**

**Office européen des brevets**

(11) **EP 0 807 669 B1**

(12) **EUROPÄISCHE PATENTSCHRIFT**

(45) Veröffentlichungstag und Bekanntmachung des Hinweises auf die Patenterteilung:
**08.03.2000 Patentblatt 2000/10**

(51) Int Cl.$^7$: **C09C 1/58**, C09C 1/60

(21) Anmeldenummer: **97113431.7**

(22) Anmeldetag: **10.11.1993**

(54) **Russ-Granulate**

Carbon black granulate

Granulé à base de noir de carbone

(84) Benannte Vertragsstaaten:
**AT BE CH DE DK ES FR GB GR IE IT LI LU MC NL PT SE**

(30) Priorität: **14.11.1992 DE 4238495**
**27.10.1993 DE 4336548**

(43) Veröffentlichungstag der Anmeldung:
**19.11.1997 Patentblatt 1997/47**

(62) Dokumentnummer(n) der früheren Anmeldung(en) nach Art. 76 EPÜ:
**93118198.6 / 0 598 318**

(73) Patentinhaber: **Degussa-Hüls Aktiengesellschaft**
**60287 Frankfurt am Main (DE)**

(72) Erfinder:
 • **Klasen, Claas-Jürgen, Dr.**
 **63517 Rodenbach (DE)**
 • **Foerster, Martin, Dr.**
 **63654 Büdingen (DE)**
 • **Höfler, Andreas, Dr.**
 **63755 Alzenau (DE)**
 • **Bauer, Klaus-Peter**
 **63452 Hanau (DE)**
 • **Riemenschneider, Herbert, Dr.**
 **63571 Gelnhausen (DE)**
 • **Franta, Oliver**
 **50668 Köln (DE)**
 • **Gilg, Rainer**
 **63584 Gründau 2 (DE)**

(56) Entgegenhaltungen:
**EP-A- 0 360 236       EP-A- 0 370 490**
**DE-B- 1 224 859**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft aus pulverförmigen Rußen erhältliche Rußgranulate.

In vielen Industriezweigen besteht das Problem, pulverförmige Ruße zu lagern, zu transportieren und zu verarbeiten. Die technische Handhabbarkeit der Ruße wird verbessert, wenn sie in granulierter Form vorliegen. Hierzu werden die Rußpulver gewöhnlich unter Zusatz von geeigneten Bindemitteln mechanisch so weit verdichtet, daß Wechselwirkungskräfte zwischen den einzelnen Pulverpartikeln in molekularen Bereichen an den Oberflächen wirksam werden. Es bilden sich dabei Produkte mit neuen Eigenschaften.

Von besonderem Interesse sind kugelförmige Ruß-Granulate. Sie weisen gegenüber pulverförmigen Rußen und zylinderförmigen Ruß-Extrudaten oder Ruß-Tabletten verbesserte Fließeigenschaften auf. Dadurch können sie kostengünstiger dosiert, transportiert und gelagert werden. In vielen Fällen müssen die granulierten Ruße bei der Anwendung wieder dispergiert werden, so zum Beispiel bei Verwendung von Ruß als struktureller Verstärker in Gummiartikeln (Gummiruße) oder zur Einfärbung von Lacken und Kunststoffen (Pigmentruße).

Die bei der Herstellung pulverförmig anfallenden Ruße müssen daher in einem nachfolgenden Verfahrensschritt granuliert werden. Hierbei ist neben einem geringen Feinanteil und einer möglichst engen Korngrößenverteilung auch eine einfache und vollständige Redispergierbarkeit trotz möglichst hoher Festigkeit (Transportstabilität) der Granalien erwünscht.

Die Redispergierbarkeit spielt beispielsweise bei Anwendungen auf den Gebieten der Lackherstellung, Kabelcompounds und technischen Gummiartikeln eine entscheidende Rolle, da selbst geringe Anteile nicht dispergierter Ruß-Agglomerate zu gravierenden anwendungstechnischen Mängeln des Endproduktes führen können.

Unter Ruß-Agglomeraten werden hier entsprechend den Definitionen in der Norm DIN 53206 durch physikalische Kohäsionskräfte (Van der Waals-Kräfte) gebundene Agglomerate aus einer Vielzahl sogenannter Ruß-Aggregate verstanden. Ruß-Aggregate entstehen durch feste Verwachsung der Ruß-Primärteilchen noch während des Ruß-Bildungsprozesses miteinander, aus denen sich durch spontane, oder durch einen Granulationsvorgang geförderte, Zusammenlagerung Ruß-Agglomerate bilden.

Bei Rußen mit hohem Hohlvolumenanteil der Aggregate spricht man von "hoher Struktur", bei geringem Hohlvolumenanteil von "niedriger Struktur". Als Maß für die Struktur eines Rußes dient die Dibutylphthalat-Absorption nach DIN 53601 (DBP-Absorption).

Die Rußstruktur bestimmt maßgeblich die Produkteigenschaften der damit eingefärbten bzw. verstärkten Lakke, Kunststoffe oder Gummiartikel. Um die Produkteigenschaften nicht zu beeinträchtigen, wird daher ein möglichst geringer Abbau der Struktur durch den Granulationsvorgang gefordert.

Granulierte Ruße werden weiterhin als Träger für Chemiekatalysatoren und als Adsorbentien eingesetzt. In diesem Fall muß durch das Material selbst oder durch Zusatz geeigneter Bindemittel gewährleistet sein, daß sich die Granalien im Gebrauch nicht auflösen. Gute Fließ- und Dosiereigenschaften sowie ein geringer Abrieb sind aber auch hier gefragt.

Verschiedene Verfahren zur Granulation bzw. Agglomeration pulverförmiger Feststoffe sind zum Beispiel aus Ullmann's Encyclopedia of Industrial Chemistry, Vol. B2, (1988), Seiten 7 - 15 bis 7 - 21 bekannt. Man unterscheidet Sprühagglomeration bzw. Sprühtrocknung, Aufbauagglomeration und Agglomeration durch mechanische Kompaktierung (Preßagglomeration). Die hierbei entstehenden Agglomerate mit Abmessungen im Bereich von einigen Zehntel Millimetern bis zu einigen Millimetern werden für die Zwecke dieser Patentanmeldung als Granulate bezeichnet, um eine deutliche Unterscheidung zu den gemäß DIN 53206 definierten Ruß-Agglomeraten zu schaffen, die durch die spontane Zusammenlagerung von Rußaggregaten entstehen und Abmessungen unterhalb von 100 µm haben.

Die Granulation pulverförmiger Feststoffe wird gewöhnlich unter Zugabe eines geeigneten Bindemittels und eines Befeuchtungsmittels, in der Regel Wasser, durchgeführt. Das Befeuchtungsmittel muß nach der Granulation mit energieaufwendigen Trocknungsverfahren bis auf eine gewisse Restfeuchte entfernt werden. Je nach Einsatzgebiet schließt sich noch eine Kalzination der Granulate bei erhöhten Temperaturen an.

Typische Einsatzgebiete dieser Agglomerationsverfahren sind die Sprühtrocknung von Waschmittelcompounds und Futtermitteln und die Aufbauagglomeration von Ruß in Stachelwellenmischern, Pflugschar- oder Gegenstrommischern. Die damit erzeugten Agglomerate bzw. Granulate sind ungleichmäßig verdichtet.

Durch die relativ breite Korngrößenverteilung werden die Fließeigenschaften der Granulatschüttung beeinträchtigt. Damit wird eine genaue Dosierung im Anwendungsfall erschwert. Die Zugabe von Befeuchtungsmitteln und Bindemitteln kann sich negativ auf die Redispergierbarkeit der Granalien auswirken.

Bei Agglomerationsverfahren mit mechanischer Verdichtung werden Walzenkompaktoren, Matrizenpressen und Extruder eingesetzt. Die von diesen Maschinen erzeugten Granulate bzw. Agglomerate haben Zylinderform und müssen zur Ausbildung der Kugelform in Rundungsaggregaten gerundet werden. Dabei zeigt sich, daß sehr unterschiedliche Granulatqualitäten erhalten werden. Die Durchmesserverteilung der Granulate weist im allgemeinen ein sehr breites Spektrum auf und enthält neben den gewünschten kugelförmigen Granalien feinteilige Bruchstücke, die in einem weiteren Verfahrensschritt abgesiebt werden müssen, um ein staubfreies Produkt zu erhalten. Die physikalischen Eigenschaften dieser Granalien wie Homogenität, Bruchfestigkeit, Abrieb und Redispergierbarkeit weisen große Schwankungen auf und können mit den bekannten Verfahren nur unzureichend aufeinander abgestimmt werden.

Walzenkompaktoren und Ringmatrizenpressen zeichnen sich gegenüber Extrudern durch wesentlich geringere Investitionskosten aus.

Ringmatrizenpressen bestehen aus einer motorisch angetriebenen zylindrischen Hohlwalze (Matrize) mit radial angeordneten Preßkanälen. Auf der Innenfläche der Ringmatrize läuft eine Preßwalze (Koller) ab, deren äußerer Durchmesser kleiner ist als der innere Durchmesser der Ringmatrize.

Die Preßwalze ist exzentrisch zur Mittelachse der Ringmatrize angeordnet. Der Achsenabstand zwischen Preßwalze und Ringmatrizenpresse kann zur Einstellung des Walzenspaltes W zwischen Matrize und Preßwalze verändert werden. Ringmatrize und Preßwalze drehen sich gleichsinnig und ziehen dadurch das zugeführte Schüttgut in den Walzenspalt ein, verdichten es und pressen es durch die radialen Preßkanäle aus.

Die sich dabei ergebende Verdichtung wird von dem Druck bestimmt, der notwendig ist, die einzelnen Agglomeratstränge aus der Matrize auszuschieben. Dieser kann durch die Geometrie der Preßkanäle, bei vorgegebenem Durchmesser über die Länge, gesteuert werden.

Die Preßwalze kann separat angetrieben sein. Dadurch ist es möglich, einen Schlupf S zwischen Matrize und Preßwalze einzustellen. Der Schlupf S ist definiert durch die positive Differenz der Umfanggeschwindigkeiten von Matrize und Preßwalze geteilt durch die jeweils höhere Umfangsgeschwindigkeit

$$S = (V_1 - V_2)/V_1 \text{ mit } V_1 \geq V_2.$$

Der so definierte Schlupf variiert zwischen Null und Eins. Durch einen von Null verschiedenen Schlupf wird das in den Walzenspalt eingezogene Material im Walzenspalt einem höheren Preßdruck unterworfen und zusätzlich geschert. Dadurch erhält man eine verbesserte Verdichtung und einen homogeneren Aufbau der Agglomerate.

Mit jeder Umdrehung der Matrize werden scheibenförmige Teilagglomerate in die Bohrungen der Matrize eingewalzt. Diese verbinden sich zu einem endlosen Strang. Die Festigkeit in der Nahtstelle zweier Teilagglomerate ist geringer als im Inneren eines Teilagglomerates (siehe Claas-Jürgen Klasen: "Die Agglomeration partikelförmiger Feststoffe in Matrizenpressen"; Fortschritt-Berichte VDI, Reihe 3: Verfahrenstechnik, Nr. 220; VDI-Verlag Düsseldorf 1990).

Durch geeignete Abstreifermesser können die aus der Matrize austretenden Agglomeratstränge abgeschnitten werden. Die geschnittenen oder ungeschnittenen zylinderförmigen Agglomerate können anschließend in einem Rundungsaggregat zu Granulaten gerundet werden. Ein Produktwechsel ist im allgemeinen mit nur geringem Aufwand verbunden, da die klare Trennung von Formgebung des Einsatzmaterials und Antrieb der Ringmatrizenpresse eine schnelle und gründliche Reinigung erlaubt.

Extruder erzeugen sehr homogene und hochverdichtete Agglomeratstränge. Extruder erfordern aber eine sehr genaue Einstellung der Feuchte und der Knetzeit des pulverförmigen Feststoffes. Typisch sind zulässige Toleranzen für die Feuchte des Einsatzmaterials von nur 1 bis 2 %. Die Investitionskosten für Extruder sind hoch.

Wie erwähnt, kommt es in vielen technischen Anwendungsfällen darauf an, Granulate mit möglichst guter Bruchfestigkeit und geringem Abrieb bei gleichzeitig guter Redispergierbarkeit zu erzeugen.

Diese Forderungen sind einander widersprechend und können mit den bekannten Agglomerations- bzw. Granulationsverfahren nicht immer vollständig erfüllt werden.

Es ist daher Aufgabe der vorliegenden Erfindung, kugelförmige Ruß-Granulate mit einem sehr engen Durchmesserspektrum zur Verfügung zu stellen, die bezüglich Bruchfestigkeit, Abrieb und Redispergierbarkeit optimiert sind.

Die erfindungsgemäßen Ruß-Granulate sind erhältlich durch ein Verfahren zur Herstellung kugelförmiger Granulate aus pulverförmigen Rußen, wobei die Ruße unter Zugabe eines Befeuchtungsmittels, und gegebenenfalls eines Bindemittels sowie weiterer Additive, in einem Mischer unter Vermischen gleichmäßig durchfeuchtet und anschließend die durchfeuchtete Mischung mit einer Ringmatrizenpresse, die einen einstellbaren Schlupf zwischen Ringmatrize und Preßwalze aufweist, zu zylinderförmigen Strängen verpreßt, und danach die Stränge in einem Rundungsaggregat mit Riffelscheibe zu kugelförmigen Granulaten gerundet werden. Die eingesetzte Ringmatrizenpresse weist Preßkanäle mit einem Längen- zu Durchmesserverhältnis von 1 : 1 bis 10 : 1 und einen Walzenspalt zwischen Ringmatrize und Preßwalze von 0,05 bis 2 mm auf.

Es wurde gefunden, daß bei geeigneter Aufbereitung der pulverförmigen Ruße durch Anfeuchten und Mischen mit einem Mischer sowie nachfolgendem Verpressen in einer geeignet dimensionierten Ringmatrizenpresse und Verrunden mit einem Rundungsaggregat mit Riffelscheibe kugelförmige Ruß-Granulate erzeugt werden können, die eine sehr enge Verteilungskurve der Korndurchmesser (Korngrößenverteilung) aufweisen.

Der mittlere Korndurchmesser der Granalien wird wesentlich durch den Durchmesser der Preßkanäle der Matrize festgelegt und kann daher leicht durch Austausch der Matrize geändert werden.

Die Korngrößenverteilung der fertigen Ruß-Granulate kann mit Hilfe einer Siebanalyse ermittelt werden. Die Siebanalyse liefert eine Summenverteilungskurve für die Korndurchmesser, aus der der mittlere Korndurchmesser abgelesen werden kann. Er ist definiert als derjenige Durchmesserwert, bei dem die Summenverteilungskurve den Wert 50 % annimmt, d. h. 50 Gew.-% der Granalien weisen einen Durchmesser auf, der kleiner als der mittlere Durchmesser ist.

Bei den erfindungsgemäßen Rußen liegen 80 Gew.-% der Granalien in einem Durchmesserintervall, dessen Breite weniger als 60 % des mittleren Korndurchmessers beträgt. Die Korngrößen-Verteilungskurven sind nicht notwendigerweise symmetrisch zum mittleren Korndurchmesser, sondern können mehr oder weniger große Asymmetrien aufweisen.

Die aus der Ringmatrizenpresse austretenden Agglomeratstränge brauchen nicht mit Hilfe eines Abstreifermessers abgelängt werden. Vielmehr dienen die Nahtstellen zwischen den Teilagglomeraten als Sollbruchstellen, die zu einem Zerbrechen der Agglomeratstränge im Rundungsaggregat in immer gleich große Teilagglomerate führen. Voraussetzung dafür ist allerdings, daß der Feuchtegehalt des Einsatzmaterials und die Dimensionierung der Ringmatrizenpresse geeignet gewählt werden.

Unter dem Feuchtegehalt wird im Rahmen dieser Erfindung der Gewichtsanteil des Befeuchtungsmittels, bezogen auf das Gesamtgewicht des angefeuchteten Einsatzmaterials, verstanden. Der optimale Feuchtegehalt für das beschriebene Granulationsverfahren liegt um bis zu 20 % unter dem optimalen Feuchtegehalt von herkömmlichen Granulationsverfahren. Dies kann im Einzelfall erhebliche Energieeinsparungen beim Trocknen des Granulats mit sich bringen.

Der optimale Feuchtegehalt hängt vom Porenvolumen und der Struktur des verwendeten Pulverrußes ab. Er kann mit wenigen Vorversuchen ermittelt werden. Die hierfür notwendigen Techniken sind dem Fachmann bekannt.

Neben den Befeuchtungs- und Bindemitteln können den pulverförmigen Rußen vor dem Granulationsvorgang noch weitere Additive bis zu einem Gewichtsanteil von etwa 20 % am Gesamtgewicht der Mischung zugefügt werden. Bei diesen Additiven kann es sich zum Beispiel um Hydrophobierungsmittel handeln.

Das beschriebene Verfahren läßt sich besonders vorteilhaft für die Herstellung von kugelförmigen RußGranulaten mit Durchmessern von 0,5 bis 4 mm einsetzen.

Wegen der hohen Sphärizität weisen die erzeugten Ruß-Granalien im allgemeinen ein gutes Fließverhalten auf. Da eine Granalie jeweils nur aus einem Teilagglomerat gebildet wird, sind die Granalien in sich homogen. Überdies sind die Preßdrücke über die gesamte Walzenbreite der Ringmatrizenpresse sehr gleichmäßig, was zu entsprechend gleichmäßig verdichteten Agglomeratsträngen führt. Dies hat eine konstante Dichte aller Ruß-Granalien zur Folge. Ihre Redispergierbarkeit ist im allgemeinen sehr gut.

Obwohl das Granulationsverfahren auf viele pulverförmige Feststoffe anwendbar ist, liegt sein bevorzugtes Einsatzgebiet auf dem Gebiet der Granulation von Rußen verschiedener Qualitäten. Das Verfahren läßt sich gleichermaßen gut für die Granulation von Gummirußen als auch von Pigmentrußen anwenden. Gummiruße weisen im allgemeinen eine DBP-Absorption zwischen 60 und 140 ml/100 g (Meßvorschrift nach DIN 53601), eine Jodadsorption unter 150 mg/g (Meßvorschrift nach DIN 53582) und eine Stampfdichte zwischen 400 und 550 g/l (Meßvorschrift nach DIN 787/11) auf, während Pigmentruße durch eine DBP-Absorption zwischen 40 und 450 ml/100 g, eine Jodadsorption zwischen 30 und 1200 mg/g und eine Stampfdichte zwischen 150 und 500 g/l charakterisiert sind.

Die Gruppe der Pigmentruße umfaßt auch die sogenannten Leitfähigkeitsruße, die sich durch besonders hohe Struktur und Oberfläche auszeichnen, was in den außergewöhnlich hohen Werten für DBP-Absorption und Jodadsorption zum Ausdruck kommt.

So weist zum Beispiel der Spezialleitfähigkeitsruß Printex XE2 (Markenname der Degussa) eine DBP-Absorption von 380 ml/100 g und eine Jodadsorption von 1075 ml/g auf.

Diese Leitfähigkeitsruße waren bisher einer Granulation nur schwer zugänglich und kommen daher überwiegend in Pulverform in den Handel. Es hat sich nun gezeigt, daß das beschriebene Granulationsverfahren in der Lage ist, auch diese Ruße zu granulieren.

Vorteilhaft gegenüber bekannten Naß-Granulationsverfahren für Ruße ist die Tatsache, daß nur sehr wenig Bindemittel den Rußen zugesetzt werden muß. Während konventionelle Granulationsverfahren einen Bindemittelgehalt der fertigen Granulate von 0,5 bis 3 Gew.-% erfordern, kommt das beschriebene Verfahren mit Bindemittelgehalten unter 1, bevorzugt unter 0,5 Gew.-% aus. Als Bindemittel kommen beispielsweise Melasse oder Ligninsulfonat zum Einsatz, die auch bei den konventionellen Granulationsverfahren verwendet werden. Für Anwendungsfälle, in denen die Bindemittel störend wirken, kann auch völlig bindemittelfrei granuliert werden.

Die Einzelperlhärte der Ruß-Granalien nach DIN 53603 liegt auch bei Abwesenheit von Bindemitteln im Bereich zwischen 10 und 50 cN und der nach DIN 53583 ermittelte Abrieb beträgt weniger als 3 Gew.-%.

Bei Granulation von Gummirußen wie zum Beispiel N326, N539, N550, N660 und N683 (Bezeichnungen nach ASTM) liegen die erzielbaren Stampfdichten zwischen 400 und 550 g/l, insbesondere zwischen 400 und 500 g/l. Die Dispergierhärte dieser Ruße, bestimmt nach DIN 53775, Teil 7, beträgt weniger als 5 %. Die so granulierten Ruße lassen sich somit hervorragend redispergieren.

Ein besonderer Vorteil des Granulationsverfahrens besteht darin, daß der Granulationsvorgang äußerst schonend abläuft. Struktur und spezifische Oberfläche der Pulverruße, gemessen durch ihre DBP-Absorption und Jodadsorption werden durch die Granulation nur um höchstens 5 % abgebaut. Diese Eigenschaft ist besonders bei Rußen mit hoher Struktur vorteilhaft.

In den folgenden Beispielen wurde für die erfindungsgemäßen Ruß-Granulate eine Ringmatrizenpresse mit Preßkanaldurchmessern von 1 mm und einem l/d Längen- zu Durchmesserverhältnis von 5 sowie einem Walzenspalt von 0,2 mm eingesetzt. Der Schlupf war in allen Fällen gleich Null.

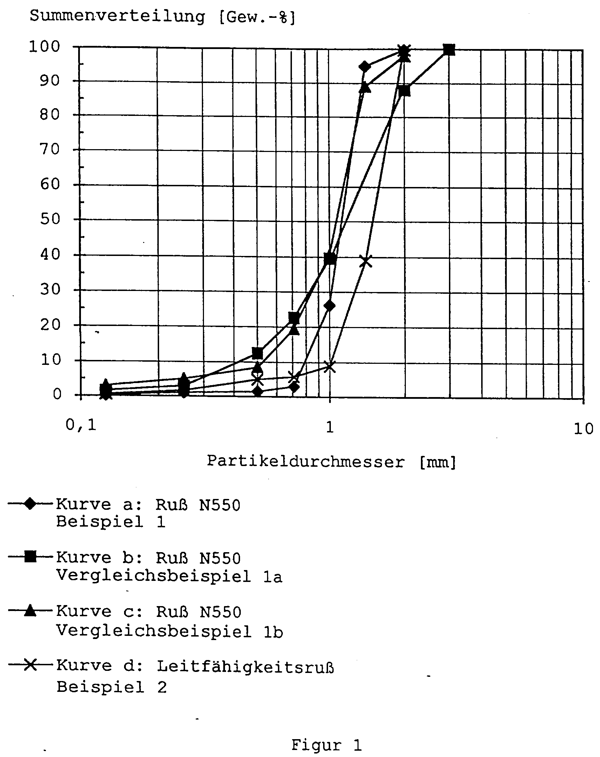

Figur 1 zeigt die aus Siebanalysen gewonnenen Summenverteilungskurven von drei Granulaten eines Gummirußes N550 (nach ASTM) sowie die Verteilungskurve eines granulierten Leitfähigkeitsrußes (Printex XE2, Degussa). Kurve a ist die Verteilungskurve eines gemäß der Erfindung gewonnenen Granulats. Die Granulate zu den Verteilungskurven b und c wurden durch konventionelle Aufbauagglomeration mit einem Stachelwellenmischer (Kurve b) bzw. einem Pflugscharmischer (Kurve c) hergestellt. Kurve d ist die Verteilungskurve für den erfindungsgemäß granulierten Leitfähigkeitsruß.

**Beispiel 1**: Granulierung von Gummirußen N550 und N660

Ruße werden in vielen technischen Gummiartikeln als strukturelle Verstärker eingesetzt. Für eine leichte Handhabbarkeit und Verarbeitbarkeit ist es einerseits notwendig, die Ruße für den Transport und die Einarbeitung zum Beispiel in Kautschuk zu möglichst abriebfesten und harten Agglomeraten zu verformen, die sich jedoch andererseits sehr leicht dispergieren lassen sollen. Die die Verarbeitbarkeit der Ruße betreffenden Spezifikationswerte haben typischerweise folgende Werte:

| | |
|---|---|
| Mittlerer Korndurchmesser | 0,5 bis 2 mm |
| Korngrößenverteilung | möglichst geringe Bandbreite |
| Dispergierhärte | < 10 % (nach DIN 53775, Teil 7) |
| Abrieb | < 5 % (nach DIN 53583) |

Wie das folgende Beispiel zeigt, ist das beschriebene Granulationsverfahren in hervorragender Weise geeignet, Ruß-Granulate mit Eigenschaften herzustellen, die einen optimalen Kompromiß zwischen den sich widersprechenden Praxis-Anforderungen darstellen.

Zur Granulierung von Ruß N550 (nach ASTM) wurde er mit Wasser auf einen Feuchtegehalt von 43 % angefeuchtet (entsprechend 754 g Wasser auf 1 kg Ruß) und in einem Mischer gründlich vermischt. Die Zugabe von Wasser ist notwendig, um einerseits die erforderlichen Preßkräfte zu reduzieren und um andererseits die Haftkräfte zwischen den Partikeln zu aktivieren.

Die erforderliche Mischzeit beträgt im Mittel ca. 4 Minuten. Aufgrund der schnellaufenden Mischwerkzeuge findet eine intensive Mischung ohne Agglomeratbildung statt.

Der angefeuchtete Ruß wurde anschließend mit einer Ringmatrizenpresse bei einer Drehzahl der Ringmatrize von 630 min$^{-1}$ und einem spezifischen Mengendurchsatz von 5,5 kg · s$^{-1}$ · m$^{-2}$ (der spezifische Mengendurchsatz ist hier gleich der Masse des verpreßten Pulvermaterials pro Kanalfläche und Zeiteinheit) verpreßt. Die Agglomeratstränge von etwa 1 bis 10 mm Länge wurden dann in einem Rundungsaggregat mit Riffelscheibe bei einer Drehzahl von 900 min$^{-1}$ für die Dauer von 10 Minuten verrundet.

Nach Trocknung der Ruß-Granulate bei 150 bis 250° C bis auf eine Restfeuchte von weniger als 1 % wurden sie anwendungstechnischen Prüfungen unterworfen. 93 % der so erhaltenen Granalien hatten einen Durchmesser zwischen 0,7 und 1,4 mm. Die weiteren anwendungstechnischen Eigenschaften sind aus Tabelle 1 zu entnehmen.

**Vergleichsbeispiel 1a und 1b**

Zum Vergleich der erfindungsgemäßen Ruß-Granulate mit bekannten Ruß-Granulaten wurde der Ruß N550 in Pulverform mit zwei konventionellen Verfahren granuliert. Es handelte sich dabei um die Granulation in einem Mischer mit Stachelwelle und in einem Pflugscharmischer. Die Ergebnisse dieser Granulationsversuche sind in Tabelle 1 mit denen nach Beispiel 1 verglichen.

Wie Tabelle 1 zeigt, weist das erfindungsgemäße Ruß-Granulat Kugeln mit einer sehr engen Korngrößenverteilung auf.

Der Abrieb liegt innerhalb der Spezifikation und wird nur vom Vergleichsbeispiel 1a unterboten, bei dem der Ruß N550 mit 1 % Ligninsulfonat als Bindemittel granuliert wurde. Vergleichsbeispiel 1b ohne Bindemittel weist einen hohen Abrieb auf. Die Dispergierhärte der erfindungsgemäßen Rußkugeln ist aufgrund der engen Kornverteilung und Homogenität sehr gering.

Bei den Vergleichsbeispielen mußte ein höherer Wassergehalt eingesetzt werden, um zufriedenstellende Granulationsergebnisse zu erhalten. Dies hat beim nachfolgenden Trocknungsvorgang einen höheren Energieverbrauch zur Folge.

Tabelle 1:

| Vergleich verschiedener Ruß-Granulate | | | |
|---|---|---|---|
| | Beispiel 1 | Vergleichsbeispiel 1a | Vergleichsbeispiel 1b |
| Verfahren | Ringmatrizenpresse | Stachelwelle | Pflugschar |
| Feuchte | 43 % | 45 % | 52 % |
| Bindemittel | - | 1 % Ligninsulf. | - |
| Kornspekturm | 93 % zwischen 0,7 - 1,4 mm | 47 % zwischen 0,7 - 1,4 mm | 75 % zwischen 0,7 - 1,4 mm |
| Abrieb | 0,6 % | 0,4 % | 3,6 % |

**Beispiel 2:**

In einer zweiten Versuchsserie wurden die Ruße N550, N660 und ein Leitfähigkeitsruß (Printex XE2 von Degussa) granuliert. Für diese Versuchsserie wurde eine Matrize mit Preßkanaldurchmessern von 1,4 mm und Preßkanallängen von 3,6 mm gewählt. Der Walzenspalt betrug wie bei Beispiel 1 0,2 mm.

Die Ruße N550 und N660 wurden jeweils mit der Ringmatrizenpresse, mit einer Stachelwelle und mit einem Pflugscharmischer granuliert und die damit erhaltenen Granulate bezüglich Einzelperlhärte, Abrieb, Farbstärke und Dispergierhärte miteinander verglichen.

Der Leitfähigkeitsruß konnte nur mit der Ringmatrizenpresse granuliert werden. Granulierversuche mit Stachelwelle und Pflugscharmischer lieferten keine brauchbaren Granulate.

Bei den konventionellen Granulationsverfahren mit Stachelwelle und Pflugscharmischer wurden jeweils 1 Gew.-% Ligninsulfonat als Bindemittel zugegeben. Bei Verwendung der Ringmatrizenpresse konnte ohne Bindemittelzusatz gearbeitet werden. Die Ergebnisse dieser Messungen sind in Tabelle 2 aufgeführt.

Tabelle 2:

| Vergleich von Einzelperlhärte, Abrieb, Farbstärke und Dispergierhärte von Rußgranulaten aus den Rußen N550, N660 und einem Leitfähigkeitsruß, die nach 3 verschiedenen Verfahren granuliert wurden. | | | |
|---|---|---|---|
| | N550 | N660 | Leitfähigkeitsruß |
| Einzelperlhärte [cN] (nach DIN 53603) | | | |
| mit Ringmatrizenpresse | 20 | 11 | 23 |
| mit Stachelwelle | 30 | 45 | - |
| mit Pflugschar | 30 | 45 | - |
| Abrieb [%] (nach DIN 53583) | | | |
| mit Ringmatrizenpresse | 1,5 | 0,8 | 0,2 |
| mit Stachelwelle | 1,9 | 1,9 | - |
| mit Pflugschar | 2,2 | 2 | - |
| Farbstärke kalt [%] (nach DIN 53775) | | | |
| mit Ringmatrizenpresse | 100 | 115 | 96 |
| mit Stachelwelle | 100 | 100 | - |
| mit Pflugschar | 95 | 90 | - |
| Dispergierhärte [%] (nach DIN 53775) | | | |
| Pulver | - | - | 26 |
| mit Ringmatrizenpresse | 2 | 3 | 23 |
| mit Stachelwelle | 3,5 | 12 | - |

Tabelle 2: (fortgesetzt)

| Vergleich von Einzelperlhärte, Abrieb, Farbstärke und Dispergierhärte von Rußgranulaten aus den Rußen N550, N660 und einem Leitfähigkeitsruß, die nach 3 verschiedenen Verfahren granuliert wurden. | | | |
|---|---|---|---|
| | N550 | N660 | Leitfähigkeitsruß |
| Dispergierhärte [%] (nach DIN 53775) | | | |
| mit Pflugschar | 1,0 | 15 | - |

Die Granulation mit Ringmatrizenpresse und nachgeschalteter Verrundung mit einer Riffelscheibe liefert die erfindungsgemäßen Ruße. Sie weisen wegen des fehlenden Bindemittels eine geringere - jedoch immer noch ausreichende - Einzelperlhärte als die konventionellen Ruß-Granulate auf, sind aber bezüglich Abrieb und Dispergierhärte den konventionellen Granulaten überlegen.

Die nach DIN 53775 bestimmte Farbstärke, (kalt) wurde bei Walzentemperaturen von 75° C gemessen. Die in Tabelle 2 angegebenen Werte sind Relativwerte, bezogen auf die Farbstärke, die mit dem mit der Stachelwelle granulierten Granulat erhalten wurden, multipliziert mit 100. Im Falle des Leitfähigkeitsrußes wurde als Bezugsgröße die Farbstärke gewählt, die mit dem Leitfähigkeitsruß in Pulverform erhalten wurde.

Es ist überraschend, daß die erfindungsgemäßen Ruße einen geringeren Abrieb aufweisen als die konventionell granulierten Ruße, obwohl auf die Zugabe eines Bindemittels verzichtet wurde. Dieser Befund ist wahrscheinlich durch die gute Kugelform und einheitliche Verdichtung dieser Granulate zu erklären, die trotz geringerer Einzelperlhärte zu einem geringeren Abrieb führt.

Das Granulat des Leitfähigkeitsrußes wurde auch bezüglich seiner Korngrößenverteilung untersucht. Die entsprechende Summenverteilungskurve ist in Figur 1 dargestellt.

Aus den Kornverteilungskurven von Figur 1 wurden für die vier in den Beispielen 1 und 2 sowie in den Vergleichsbeispielen 1a und 1b hergestellten Granulate jeweils der mittlere Korndurchmesser sowie das 80 %-Durchmesserintervall bestimmt, welches 80 Gew.-% der jeweiligen Granalien umfaßt. Die Ergebnisse sind in Tabelle 3 aufgeführt. Das 80 %-Intervall wurde aus den Durchmessern der Verteilungskurven für die Summenwerte von 10 und 90 % ermittelt. Es ist in Tabelle 3 in Prozent des mittleren Korndurchmessers angegeben. Man erkennt aus dieser Tabelle, daß die erfindungsgemäßen Granulate eine deutlich engere Korngrößenverteilung aufweisen als die Vergleichsgranulate. Insbesondere besitzen die erfindungsgemäßen Granulate einen wesentlich geringeren Feinanteil. Bei dem Granulat des Leitfähigkeitsrußes nach Beispiel 2 ist der Einfluß des größeren Preßkanal-Durchmessers auf den sich ergebenden mittleren Korndurchmesser zu erkennen.

Tabelle 3

| | mittlerer Korndurchmesser [mm] | 80 %-Durchmesserintervall in Prozent des mittleren Durchmessers |
|---|---|---|
| Beispiel 1 Ruß N550 nach Erfindung | 1,14 | 43 % |
| V-Beispiel 1a Ruß N550 mit Stachelwelle | 1,16 | 150 % |
| V-Beispiel 1b Ruß N550 mit Pflugschar | 1,12 | 84 % |
| Beispiel 2 Leitfähigkeitsruß nach Erfindung | 1,37 | 59 % |

**Patentansprüche**

1. Ruß-Granulat enthaltend Ruß und gegebenenfalls Bindemittel und weitere Additive, welches folgende physikalisch-chemischen Kenndaten aufweist:

   a) einen mittleren Durchmesser der Granalien zwischen 0,5 und 4 mm,

   b) ein Durchmesserintervall, welches 80 Gew.-% der Granalien umfaßt und dessen Breite weniger als 60 % des mittleren Korndurchmessers beträgt,

   c) einen Gehalt an Bindemitteln von weniger als 1 Gew.-%, bevorzugt weniger als 0,5 Gew.-%,

d) eine Einzelperlhärte der Granalien zwischen 10 und 50 cN und

e) einen Abrieb von weniger als 3 Gew.-%, insbesondere weniger als 1 Gew.-%.

**2.** Ruß-Granulat nach Anspruch 1 aus Gummirußen, welche in Pulverform folgende Eigenschaften aufweisen:

a) eine DBP-Absorption zwischen 60 und 140 ml/100 g

b) einen Jodadsorption unter 150 mg/g und

c) eine Stampfdichte zwischen 400 und 550 g/l,

**dadurch gekennzeichnet**,
daß das Granulat eine Stampfdichte zwischen 400 und 550 g/l, insbesondere 400 und 500 g/l aufweist, eine Dispergierhärte von weniger als 5 % besitzt und daß DBP-Zahl und Jodadsorption des Granulats höchstens 5 % gegenüber den Werten der Pulverform vermindert sind.

**3.** Ruß-Granulat nach Anspruch 1 aus Pigmentrußen, welche in Pulverform folgende Eigenschaften aufweisen:

a) eine DBP-Absorption zwischen 40 und 450 ml/100 g

b) eine Jodadsorption zwischen 30 und 1200 mg/g und

c) eine Stampfdichte zwischen 150 und 500 g/l,

**dadurch gekennzeichnet**,
daß das Granulat eine Stampfdichte zwischen 180 und 550 g/l aufweist und daß DBP-Zahl und Jodadsorption des Granulats nur um höchstens 5 % gegenüber den Werten der Pulverform vermindert sind.

## Claims

**1.** Carbon black granulate containing carbon black and optionally binder and further additives, which possesses the following physical-chemical characteristics:

a) a mean diameter of the granules of between 0.5 and 4 mm,

b) a diameter range which includes 80 wt % of the granules and whose breadth comes to less than 60% of the mean grain diameter,

c) a content of binders of less than 1 wt %, preferably less than 0.5 wt %,

d) an individual pearl hardness of the granules of between 10 and 50 cN and

e) a dust content of less than 3 wt %, in particular less than 1 wt %.

**2.** Carbon black granulate according to claim 1 of rubber blacks which in powder form have the following properties:

a) a DBP absorption of between 60 and 140 ml/100 g,

b) an iodine adsorption of less than 150 mg/g and

c) a stamp density of between 400 and 550 g/l,

characterised in that
the granulate has a stamp density of between 400 and 550 g/l, in particular 400 and 500 g/l, possesses a dispersing hardness of less than 5%, and that DBP number and iodine adsorption of the granulate are reduced by not more than 5% compared with the values of the powder form.

3. Carbon black granulate according to claim 1 of pigment blacks which have in powder form the following properties:

   a) a DBP absorption of between 40 and 450 ml/100 g,

   b) an iodine adsorption of between 30 and 1200 mg/g and

   c) a stamp density of between 150 and 500 g/l,

   characterised in that
   the granulate has a stamp density of between 180 and 550 g/l and that DBP number and iodine adsorption of the granulate are reduced by only 5 % at the most compared with the values of the powder form.


**Revendications**

1. Granulé de noir de carbone contenant du noir de carbone et le cas échéant un liant et d'autres additifs qui présentent les caractéristiques physicochimiques suivantes :

   a) un diamètre moyen des granulés compris entre 0,5 et 4 mm,
   b) un intervalle de diamètre qui comprend 80 % des granulés et dont la largeur est inférieure à 60 % du diamètre granulométrique moyen,
   c) une teneur en liants inférieure à 1 % en poids, de préférence inférieure à 0,5 % en poids,
   d) une dureté individuelle des perles de granulé comprises entre 10 et 50 cN, et
   e) une usure inférieure à 3 % en poids, en particulier inférieure à 1 % en poids.

2. Granulé de noir de carbone selon la revendication 1 provenant de noirs de carbone de caoutchouc, qui présentent sous forme pulvérulente les propriétés suivantes :

   a) une absorption DBP comprise entre 60 et 140 ml/100 g,
   b) une adsorption d'iode inférieure à 150 mg/g et
   c) une densité de compression comprise entre 400 et 550 g/l,

   caractérisé en ce que
   le granulé présente une densité de compression comprise entre 400 et 550 g/l, en particulier entre 400 et 500 g/l, possède une dureté de dispersion inférieure à 5 %, et en ce que l'indice DBP et l'adsorption d'iode du granulé sont diminués d'au plus 5 % par rapport aux valeurs de la forme pulvérulente.

3. Granulé de noir de carbone selon la revendication 1 à partir de noirs de carbone de pigments, qui présentent sous forme pulvérulente les propriétés suivantes :

   a) une absorption DBP comprise entre 40 et 450 ml/100 g,
   b) une adsorption d'iode inférieure à 30 et 1200 mg/g et
   c) une densité de compression comprise entre 150 et 500 g/l,

   caractérisé en ce que
   le granulé présente une densité de compression comprise entre 180 et 550 g/l, et en ce que l'indice DBP et l'adsorption d'iode du granulé ne sont diminués que d'au plus 5 % par rapport aux valeurs de la forme pulvérulente.

Figur 1